# EUROPÄISCHE PATENTANMELDUNG

(11) **EP 2 161 102 A2**
(43) Veröffentlichungstag der Anmeldung: **10.03.2010**
(21) Anmeldenummer: 09168617.0
(22) Anmeldetag: 25.08.2009
(51) Int. Cl.: B25B 23/00, B25B 31/00

(54) **System zum Befestigen eines Bauteils**

(30) Priorität: 02.09.2008 DE 102008045414
(71) Anmelder: SFS intec Holding AG, 9435 Heerbrugg (CH)
(72) Erfinder: Palm, Erich, 9434 Au (CH)

(57) **Zusammenfassung**

Beschrieben ist ein System zum Befestigen eines Bauteils (12, 14) auf einer Tragkonstruktion (16) mit einem Befestiger (10) aus einem Gewindestift (30) und einer Mutter (50), zwischen denen eine Hemmeinrichtung angeordnet ist, die bis zum Erreichen eines vorgebbaren Drehmoments eine Relativdrehung von Mutter und Gewindestift verhindert und so das Setzen des Befestigers (10) durch Drehen an der Mutter (50) und ab dem Erreichen des vorgebbaren Drehmoments das Drehen der Mutter (50) auf dem Gewindestift (30) und so das Festspannen des Bauteils auf der Tragkonstruktion erlaubt. Ein Antriebsbit (36) zum Drehen der Mutter hat einen zugeordneten Tiefenanschlag (40), der sich auf dem Gewindestift (30) abstützt, zum Trennen der Antriebsverbindung zwischen dem Antriebsbit (36) und der Mutter (50) nach dem Erreichen einer vorgebbaren Relativposition der Mutter auf dem Gewindestift. Das System gewährleistet, dass das Bauteil auf der Tragkonstruktion (16) automatisch richtig befestigt wird.

## Beschreibung

Die Erfindung betrifft ein System zum Befestigen eines Bauteils, insbesondere eines Flächenelements, auf einer Tragkonstruktion, mit einem Befestiger, mit einem mit einem Schraubwerkzeug kuppelbaren Antriebsbit zum Erfassen und Drehen des Befestigers und mit einem dem Antriebsbit zugeordneten Tiefenanschlag zum Trennen der Antriebsverbindung zwischen dem Antriebsbit und dem Befestiger bei dem Erreichen einer vorgebbaren Relativposition des Befestigers.

Ein solches System ist aus der EP 0 516 295 A1 bekannt, auf die weiter unten näher eingegangen wird.

Bei der vorgenannten Tragkonstruktion handelt es sich vorzugsweise um eine Pfosten und Riegel od. dgl. aufweisende Dach- oder Fassadenkonstruktion, an welcher Flächenelemente wie Glasscheiben zu befestigen sind. Mittels einer Schraube, die mit einem Grundprofil von Pfosten oder Riegel, welche jeweils aus Metall bestehen, in Gewindeeingriff gebracht wird, werden über eine äußere Glashalteleiste und über Glasauflagedichtungen und gegebenenfalls über ein zusätzliches Isolatorprofil Flächenelemente an dem Grundprofil festgelegt. Eine Fassadenkonstruktion dieser Art ist beispielsweise aus der DE 10 2005 001 986 A1 bekannt. Bei dieser Fassadenkonstruktion ist der Befestiger eine gewindeschneidende Bohrschraube, die in einen Schraubsteg des Grundprofils durch eine Bohrung in der Glashalteleiste hindurch eingeschraubt wird. Bei einer solchen Fassadenkonstruktion liegen am Anfang die Glasauflagedichtungen relativ lose auf den Glasscheiben auf. Durch das Anziehen der Schraube müssen über die Glashalteleiste die Glasauflagedichtungen so an die Glasscheiben angedrückt werden, dass sie richtig anliegen und gut dichten, ohne aber dabei zu stark zusammengedrückt zu werden. Das Erreichen dieses Ziels ist ganz und gar von der Geschicklichkeit des Monteurs abhängig. Wenn dieser die Schraube bei der Montage zu sehr oder zu wenig anzieht, kann das fatale Folgen haben, weil Feuchtigkeit in Hohlräume unter der Glashalteleiste eindringen kann. In einem solchen Fall kann auch nicht mit einem Schraubwerkzeug mit Tiefenanschlag gearbeitet werden, weil sich der Tiefenanschlag auf der Glashalteleiste abstützen würde, von welcher aber zu Anfang nicht bekannt ist, ob oder wie gut sie bereits die Glasauflagedichtungen gegen die Glasscheiben drückt.

Es ist zwar aus der WO 2006/094394 A1 bekannt, zwischen der Glashalteleiste und dem Grundprofil Finger anzuordnen, über die sich die Glashalteleiste im montierten Zustand auf dem Grundprofil abstützt, diese Konstruktion erfordert jedoch, dass die Glasscheiben immer die gleiche Dicke haben. Für Glasscheiben anderer Dicke müssen Finger anderer Länge eingesetzt werden. Das ist aufwendig, weil die Finger ein Bestandteil eines größeren Profilteils sind, das entsprechend auf Lager gehalten werden muss, um bei Bedarf eingesetzt werden zu können.

Bei einem bekannten Rahmensystem mit T-Stoßverbindung nach der DE 100 48 954 A1 stand zwischen einem Abdeckprofil und einem Grundprofil zwar thermische Trennelemente vorgesehen, durch die hindurch Schrauben in einen Schraubkanal eingeschraubt werden, hier kommt jedoch ebenfalls das Abdeckprofil über das thermische Trennelement mit dem Grundprofil in direkte Berührung und die Schraube ist somit am Anschlag, wenn sie stärker als geplant angezogen wird. Auch in diesem Fall ist also die Qualität der hergestellten Befestigung von der Geschicklichkeit des Monteurs abhängig und eignet sich über dies auch nur für eine bestimmte Glasscheibendicke.

Die eingangs bereits erwähnte EP 0 516 295 A1 offenbart ein System mit einem Tiefenanschlag, der auf dem zu befestigenden Gegenstand in Anlage kommt. Dieser Tiefenanschlag ist als eine Entkupplungsbüchse ausgebildet. Wenn die Entkupplungsbüchse auf dem zu befestigenden Teil aufsitzt, wird der als eine Schraube ausgebildete Befestiger weiter in eine Tragkonstruktion eingedreht. Dadurch kommt der Schraubenkopf schließlich aus der Entkupplungsbüchse frei. Nachteilig ist auch bei diesem bekannten System, dass sich der Tiefenanschlag auf der Tragkonstruktion abstützen muss, von welcher zu Anfang nicht immer bekannt ist, ob sie sich bereits in einer korrekten Position befindet, so dass die hergestellte Verbindung sehr von der Geschicklichkeit des Monteurs abhängig ist.

Die DE 10 2005 031 014 A1 offenbart eine selbstschneidende Betonschraube und ein Werkzeug zum Einschrauben derselben. Die Betonschraube ist als ein Gewindestift ausgeführt und weist eine mit dem Gewindestift in Gewindeeingriff befindliche Mutter und eine zwischen der Mutter und dem Gewindestift angeordnete, aus Nuten und Zylinderstiften bestehende Hemmeinrichtung auf. Die drehfeste Verbindung zwischen der Mutter und der Betonschraube ist wegabhängig selbstlösend, beispielsweise bei Erreichen einer vorgebbaren Einschraubtiefe der Betonschraube in ein Bohrloch oder bei Aufziehen auf einem zu befestigenden Gegenstand. Auch diese wegabhängige Selbstlösung der drehfesten Verbindung erfordert einen auf der Unterlage oder auf dem auf der Unterlage zu befestigenden Gegenstand in Anlage kommenden Tiefenanschlag. Zu diesem Zweck sitzen in einer zwischen der Mutter und dem Gewindestift gebildeten Bohrung ein Metallstift und darunter ein Kunststoffstift. Wenn die Mutter eingeschraubt wird, schieben sich beide Stifte in der Bohrung immer weiter nach oben, bis schließlich nur noch der Kunststoffstift mit der Mutter und dem Gewindestift in Eingriff ist, der dann aber bei dem nun möglichen Drehen der Mutter auf dem Gewindestift einfach abgeschert wird. Der Kunststoffstift hat nur die Aufgabe, den Metallstift, der für den formschlüssigen Eingriff zwischen der Mutter und dem Gewindestift maßgeblich ist, nach oben zu schieben, bis er die Bohrung verlässt. Auch in diesem Fall wird die Befestigung durch die Position der Unterlage und die Geschicklichkeit des Monteurs beeinflusst.

Es gibt somit einen Bedarf an einem System der eingangs genannten Art, mit dem sich einwandfreie Befestigungen und damit Abdichtungen von gleich bleibender Qualität erzielen lassen.

Aufgabe der Erfindung ist es, ein dafür geeignetes System zu schaffen, mit dem sich ein bestimmtes Drehmoment vorgeben lässt, dessen Erreichen dann aber nicht von der Geschicklichkeit des Monteurs abhängig ist.

Die Aufgabe ist ausgehend von einem System der eingangs genannten Art erfindungsgemäß dadurch gelöst, dass der Befestiger aus einem Gewindestift und einer mit dem Gewindestift in Gewindeeingriff befindlichen Mutter besteht, wobei zwischen der Mutter und dem Gewindestift eine Hemmeinrichtung angeordnet ist, die bis zum Erreichen eines vorgebbaren Drehmoments eine Relativdrehung von Mutter und Gewindestift verhindert und so das Setzen des Befestigers durch Drehen an der Mutter und ab dem Erreichen des vorgebbaren Drehmoments das Drehen der Mutter auf dem Gewindestift und so das Festspannen des Bauteils auf der Tragkonstruktion erlaubt, wobei die vorgebbare Relativposition des Befestigers die Relativposition der Mutter auf dem Gewindestift ist, dass die Mutter einen äußeren Kraftangriff aufweist, dass das Antriebsbit eine die Mutter in einer Kraftangriffsöffnung aufnehmende und die Mutter an dem Kraftangriff erfassende Nuss ist und dass der Tiefenanschlag auf dem Gewindestift abstützbar ausgebildet ist.

Bei dem System nach der Erfindung führt das Erreichen des vorgebbaren Drehmoments bei dem Setzen des Befestigers durch Drehen an der Mutter automatisch dazu, dass nicht weiterhin durch Drehen an der Mutter der Gewindestift in die Tragkonstruktion eingedreht wird, sondern dass sich von da an die Mutter auf dem Gewindestift dreht. Wenn dieses System bei einer Dach- oder Fassadenkonstruktion der oben beschriebenen Art eingesetzt wird, ergibt sich somit eine hohe Einstellgenauigkeit, auf die der Monteur keinen Einfluss hat und die also von dessen Geschicklichkeit unabhängig ist.

Bei dem Einsatz des erfindungsgemäßen Systems zum Befestigen eines Bauteils wie einem Flächenelement auf einer Tragkonstruktion wird nicht nur mit hoher Einstellsicherheit immer bei dem vorgegebenen Drehmoment das Setzen des Befestigers beendet, sondern von da an zusätzlich durch Drehen der Mutter auf dem Gewindestift eine bestimmte vorgebbare Position des zu befestigenden Bauteils hergestellt und schließlich das Bauteil mit vorgebbarer Kraft an die Tragkonstruktion angedrückt. Erfindungsgemäß wird zu diesem Zweck die Antriebsverbindung des Antriebsbits mit der Mutter bei dem Erreichen einer vorgebbaren Relativposition der Mutter auf dem Gewindestift getrennt, ohne dass zu diesem Zweck der Tiefenanschlag mit dem zu befestigenden Bauteil oder der Tragkonstruktion in Berührung gelangt. Der Tiefenanschlag stützt sich nämlich auf dem Gewindestift selbst und nicht auf dem zu befestigenden Bauteil ab. Darüber hinaus ermöglicht das erfindungsgemäße System, mit einer Befestigerlänge Glasscheiben unterschiedlicher Dicke zu befestigen. Dabei ist stets gewährleistet, dass zuerst ein zu befestigendes Bauteil und dessen Tragkonstruktion zusammengezogen werden, d. h. in gegenseitige Anlage gebracht werden und dass dann zusätzlich die Mutter so weit angezogen wird, dass automatisch die gewünschte Festspannkraft erreicht wird.

Ausgestaltungen des Systems nach der Erfindung bilden die Gegenstände der abhängigen Ansprüche.

Wenn in einer Ausgestaltung des Systems nach der Erfindung der Gewindestift zum Setzen in ein Loch in der Tragkonstruktion einschraubbar ist, bietet die Erfindung verschiedene Möglichkeiten, das gewünschte Drehmoment vorzugeben.

Wenn in einer weiteren Ausgestaltung des Systems nach der Erfindung das Loch ein Sackloch ist, in das der Befestiger bis zum Aufsetzen des Gewindestiftes am Boden des Loches einschraubbar ist, lässt sich auf einfache Weise der Punkt festlegen, an welchem das vorgegebene Drehmoment erreicht wird und sich die Mutter auf dem Gewindestift zu drehen beginnt. Das Eindrehen des Gewindestiftes bis auf den Boden des Sackloches gewährleistet, dass der Gewindestift immer auf maximaler Gewindelänge eingeschraubt ist und so die höchste Ausreißkraft des Befestigers gewährleistet ist. Statt in ein Sackloch könnte der Befestiger auch in eine Hohlkammer eines Schraubsteges eingeschraubt werden, der einfach zwei eng beabstandet gegenüberliegende Wände aufweist.

Wenn in einer weiteren Ausgestaltung des Systems nach der Erfindung das Loch eine unten offene Bohrung ist, in die der Befestiger einschraubbar ist, bis der Gewindestift auf einem Anschlag auf der Tragkonstruktion unterhalb des Loches aufsetzt, lässt sich der Punkt, an welchem das vorgegebene Drehmoment erreicht wird, unabhängig von der Tiefe des Loches festlegen, nämlich zum Beispiel durch einen an der Tragkonstruktion angebrachten Anschlag unterhalb des Loches.

Wenn in einer weiteren Ausgestaltung des Systems nach der Erfindung der Tiefenanschlag ein in der Kraftangriffsöffnung des Antriebsbits axial vorstehender Bolzen ist, braucht ein übliches Antriebsbit nur geringfügig modifiziert zu werden, um bei der Erfindung einsetzbar zu sein.

Wenn in einer weiteren Ausgestaltung des Systems nach der Erfindung der Bolzen in die Kraftangriffsöffnung des Antriebsbits einschiebbar ausgebildet ist, kann auch der Bolzen selbst, der den Tiefenanschlag bildet, sehr einfach ausgebildet und entsprechend einfach ausgewechselt werden.

Wenn in einer weiteren Ausgestaltung des Systems nach der Erfindung der Bolzen ein Stufenbolzen ist, lässt sich der Tiefenanschlag auf einfache Weise auf den Innendurchmesser der Mutter und somit auf den Durchmesser der Stirnseite des Gewindestiftes einstellen.

Wenn in einer weiteren Ausgestaltung des Systems nach der Erfindung der Bolzen in dem Antriebsbit axial einstellbar ist, lassen sich auf einfache Weise unterschiedliche Dicken von zu befestigenden Bauteilen berücksichtigen.

Wenn in einer weiteren Ausgestaltung des Systems nach der Erfindung der Bolzen einen Gewindeansatz hat, der mit dem Antriebsbit in Gewindeeingriff ist, lässt sich die vorgenannte Anpassung auf einfache Weise vornehmen, indem der Bolzen mehr oder weniger weit in die Nuss eingedreht wird.

Wenn in einer weiteren Ausgestaltung des Systems nach der Erfindung die Hemmeinrichtung einen an dem die Mutter aufnehmenden Ende des Gewindestiftes angebrachten Fortsatz aufweist, dessen Verbindung mit dem übrigen Gewindestift eine dem vorgebbaren Drehmoment angepasste Sollbruchstelle hat, der Fortsatz wie die Mutter einen äußeren Kraftangriff aufweist und die Kraftangriffsöffnung des Antriebsbits so ausgebildet ist, dass sie die äußeren Kraftangriffe des Fortsatzes und der Mutter gemeinsam erfasst, lässt sich mit ein und demselben Antriebsbit der Befestiger setzen und exakt ab dem eingestellten vorgegebenen Drehmoment die Mutter auf dem Gewindestift in Drehung versetzen.

Wenn in einer weiteren Ausgestaltung des Systems nach der Erfindung die Hemmeinrichtung, mit der das gewünschte Drehmoment vorgegeben wird, durch eine zwischen den Gewinden des Gewindestiftes und der Mutter angeordnete Klemmbuchse gebildet ist, lässt sich der Befestiger auf einfache Weise aus einem Gewindestift und einer ähnlich wie eine Sicherungsmutter aufgebauten Mutter herstellen.

Dabei kann in einer weiteren Ausgestaltung des Systems nach der Erfindung die Klemmbuchse aus Kunststoff bestehen.

Wenn in einer weiteren Ausgestaltung des Systems nach der Erfindung das Gewinde des Gewindestiftes ein Verankerungsgewinde am einen Ende und ein Spanngewinde an dem die Mutter aufnehmenden anderen Ende umfasst und der Gewindeeingriff zwischen der Mutter und dem Spanngewinde des Gewindestiftes so ausgebildet ist, dass er bis zum Erreichen des vorgebbaren Drehmoments selbsthemmend ist, lässt sich die Hemmeinrichtung auf einfache Weise durch entsprechende Ausbildung des Spanngewindes und des Muttergewindes herstellen.

Wenn in einer weiteren Ausgestaltung des Systems nach der Erfindung die Hemmeinrichtung durch eine Klebeverbindung oder durch eine zusätzliche Klebeverbindung zwischen den Gewinden des Gewindestiftes und der Mutter gebildet ist, lässt sich die Hemmeinrichtung einfach als eine Klebeverbindung herstellen oder es lässt sich die auf andere Weise bereits hergestellte Hemmeinrichtung durch eine zusätzliche Klebeverbindung zusätzlich verstärken, beispielsweise um das Drehmoment noch genauer vorzugeben. Statt Klebstoff kann auch ein Lack oder eine andere Beschichtung eingesetzt werden.

Ausführungsbeispiele der Erfindung werden im Folgenden unter Bezugnahme auf die Zeichnungen näher beschrieben. Es zeigt
- Fig. 1: den Einsatz eines Systems nach der Erfindung bei der Be- festigung von Glasscheiben auf einer Fassadenkonstruktion, wobei der Setzvorgang in den Fig. 1a - 1c in drei verschie- denen Phasen gezeigt ist,
- Fig. 2: für den gleichen Einsatzzweck wie in Fig. 1 das System nach der Erfindung, jedoch bei der Befestigung von Glasscheiben, die eine geringere Dicke aufweisen, wobei der Setzvorgang in den Fig. 2a - 2e in fünf verschiedenen Phasen gezeigt ist,
- Fig. 3: den Einsatz des Systems nach der Erfindung an einer ande- ren Tragkonstruktion,
- Fig. 4: in gleicher Darstellung wie in Fig. 3 ein System nach der Er- findung, das ein Antriebsbit mit einstellbarem Tiefenanschlag aufweist, und
- Fig. 5: eine Teilansicht eines Systems nach der Erfindung, wobei der Befestiger mit einem Fortsatz über eine Sollbruchstelle verbunden ist.

Im Folgenden wird zwar ein erfindungsgemäßes System zum Befestigen von Glasscheiben auf einer Tragkonstruktion beschrieben, bei der es sich um eine Fassadenkonstruktion handelt, das System eignet sich jedoch grundsätzlich auch zum Befestigen eines Bauteils, insbesondere eines Flächenelements wie einer Glasscheibe auf einer Dach-, Wintergarten- od. dgl. Konstruktion und für die Befestigung von Bauteilen generell.

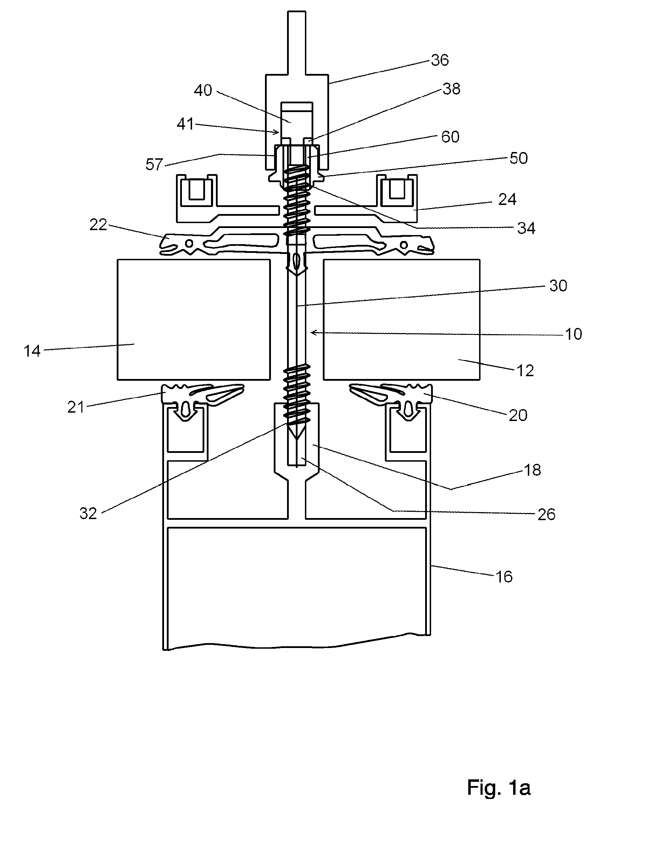

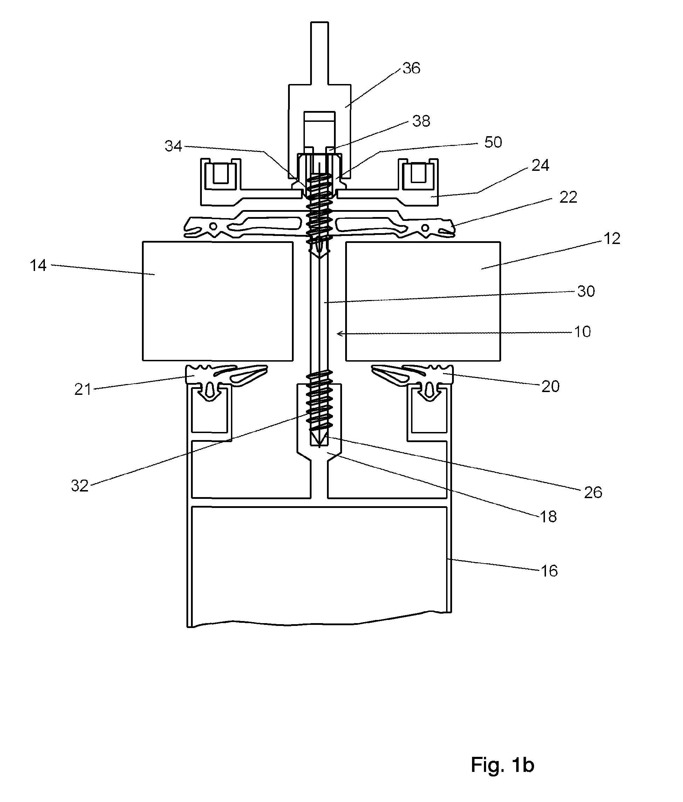

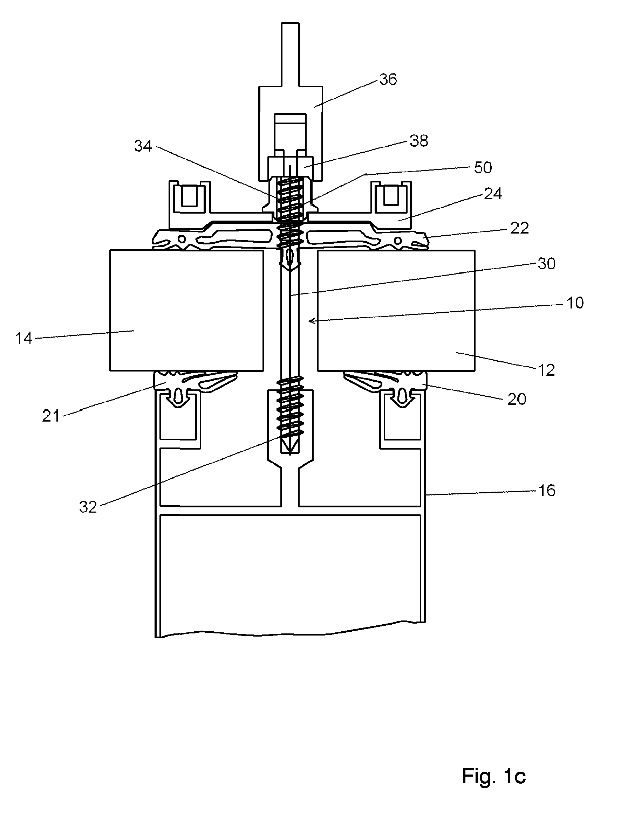

Zunächst wird ein Ausführungsbeispiel anhand von Fig. 1 näher beschrieben, die den Einsatz eines insgesamt mit 10 bezeichneten Befestigers und eines Systems nach der Erfindung bei der Befestigung von Glasscheiben 12, 14 auf einer Fassadenkonstruktion und insbesondere in den Fig. 1a - 1c in drei Phasen den Setzvorgang des Befestigers 10 zeigt. Die Fassadenkonstruktion wird hier durch ein Grundprofil 16 eines ihrer Pfosten oder Riegel veranschaulicht.

Der Befestiger 10 besteht aus einem Gewindestift 30, einer mit dem Gewindestift in Gewindeeingriff befindlichen Mutter 50 und einer zwischen den beiden wirksamen Drehhemmeinrichtung. Die Hemmeinrichtung ist in Fig. 1 als eine Klemmbuchse 60 aus Kunststoff dargestellt. Die Klemmbuchse 60 befindet sich zwischen den Gewinden des Gewindestiftes 30 und der Mutter 50 und bewirkt, dass bis zum Erreichen eines vorgebbaren Drehmoments eine Relativdrehung der Mutter 50 und des Gewindestiftes 30 verhindert wird. Somit kann durch Drehen an der Mutter 50 der Befestiger 10 gesetzt werden, was im Folgenden noch näher beschrieben ist. Das Gewinde des Gewindestiftes 30 umfasst ein Verankerungsgewinde 32 an einem Ende und ein Spanngewinde 34 an dem anderen Ende, das mit dem Gewinde der Mutter 50 in Eingriff ist. Der Gewindeeingriff zwischen der Mutter 50 und dem Spanngewinde 34 des Gewindestiftes 30 kann so ausgebildet sein, dass er bis zum Erreichen des vorgebbaren Drehmoments selbsthemmend ist. Diese selbsthemmende Gewindeausbildung kann somit die Ausbildung der Hemmeinrichtung als eine Klemmbuchse ersetzen oder ergänzen.

Von dem Grundprofil 16 steht mittig ein Schraubsteg 18 vor, der hier als ein Hohlkammerprofil ausgebildet ist und Bohrungen aufweist, in die das Verankerungsgewinde 32 eingreifen kann. An seinen beiden in Fig. 1 oberen Längsrändern trägt das Grundprofil 16 jeweils eine Glasauflagedichtung 20 bzw. 21 für die Glasscheibe 12 bzw. 14. An der Oberseite der Glasscheiben 12 und 14 befindet sich eine Glasauflagedichtung 22. Über der Glasauflagedichtung 22 befindet sich eine Glashalteleiste 24, die mit dem Befestiger 10 mit einem bestimmten Druck gegen die Glasauflagedichtung 22 und die Glasscheiben 12, 14 gedrückt werden muss, damit die Glasscheiben 12, 14 sicher befestigt werden und die Glasauflagendichtungen 20 - 22 sicher abdichten.

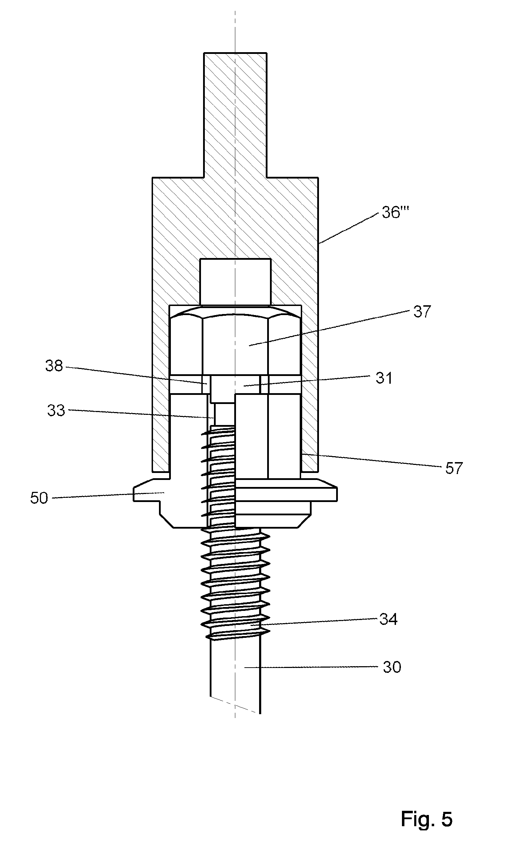

Zum Setzen des Befestigers 10 dient ein Antriebsbit 36, das mit einem Schraubwerkzeug (nicht dargestellt) kuppelbar ist. Das Antriebsbit 36 dient zum Erfassen und Drehen der Mutter 50 mit dem Gewindestift 30 bis zum Erreichen des vorgebbaren Drehmoments und anschließend zum Drehen der Mutter 50 auf dem Gewindestift 30. Dem Antriebsbit 36 ist ein Tiefenanschlag 41 zum Trennen der Antriebsverbindung zwischen dem Antriebsbit 36 und der Mutter 50 bei dem Erreichen einer vorgebbaren Relativposition der Mutter auf dem Gewindestift zugeordnet. Die Mutter 50 weist einen äußeren Kraftangriff 57 auf (in der Schnittansicht in Fig. 1 nicht sichtbar). In der folgenden Beschreibung wird davon ausgegangen, dass es sich bei dem Kraftangriff 57 der Mutter 50 um einen üblichen Sechskant handelt (in Fig. 5 gezeigt). In einer Kraftangriffsöffnung 38 nimmt das Antriebsbit 36 die Mutter 50 auf und erfasst den Kraftangriff 57 der Mutter. Das Antriebsbit 36 ist ansonsten wie eine übliche Nuss eines Schraubwerkzeuges ausgebildet. Der dem Antriebsbit 36 zugeordnete Tiefenanschlag 41 ist in dem Ausführungsbeispiel nach Fig. 1 ein in der Kraftangriffsöffnung 38 des Antriebsbits 36 axial vorstehender Bolzen 40, der in der Kraftangriffsöffnung 38 mit Gleitsitz angeordnet ist. Der Bolzen 40 ist ein Stufenbolzen, der mit seinem vorderen Teil kleineren Querschnittes in die Gewindebohrung der Mutter 50 passt und sich auf dem oberen Ende des Gewindestiftes 30 abstützt. Anhand der Darstellung in den Fig. 1a - 1c wird nun das Setzen des Befestigers 10 näher beschrieben.

In der in Fig. 1a dargestellten Phase hat das Setzen des Befestigers 10 gerade begonnen. Das Verankerungsgewinde 32 ist bereits teilweise in ein Sackloch 26 in dem Schraubsteg 18 eingeschraubt. Das Einschrauben wird durch das Antriebsbit 36 bewirkt, das mit dem nicht dargestellten Schraubwerkzeug gekuppelt ist. Die Hemmeinrichtung, hier die Klemmbuchse 60 zwischen der Mutter 50 und dem Gewindestift 30, ist so ausgebildet, dass der Befestiger 10 durch Drehen an der Mutter 50 gesetzt werden kann. Die Hemmeinrichtung verhindert eine Relativdrehung der Mutter 50 und des Gewindestiftes 30, bis ein vorgebbares Drehmoment erreicht ist. Dieser Punkt wird erreicht, wenn der Befestiger 10 in der in Fig. 1b dargestellten Phase den Boden des Sackloches 26 erreicht. An diesem Punkt steigt das Drehmoment schnell an, das vorgegebene Drehmoment wird überschritten und es wird die Mutter 50 auf dem Gewindestift 30 in Drehung versetzt. Während sich das Antriebsbit 36 über den Bolzen 40 auf dem Gewindestift 30 abstützt, dreht sich die Mutter 50 auf dem Gewindestift 30 in Fig. 1b nach unten, um in der Phase nach Fig. 1c einen Punkt zu erreichen, wo sie die Kraftangriffsöffnung 38 des Antriebsbits 36 verlassen hat, so dass der Drehantrieb der Mutter aufhört. An diesem Punkt hat die sich auf dem Gewindestift 30 nach unten bewegende Mutter 50 die Glashalteleiste 24 so weit mit nach unten genommen, dass die Glasauflagedichtungen 20-22 nunmehr fest an den Glasscheiben 12, 14 anliegen und diese in ihrer Lage dauerhaft und unter Abdichtung an den Auflagestellen festhalten. Das Antriebsbit 36 kann nun von dem Befestiger 10 entfernt werden.

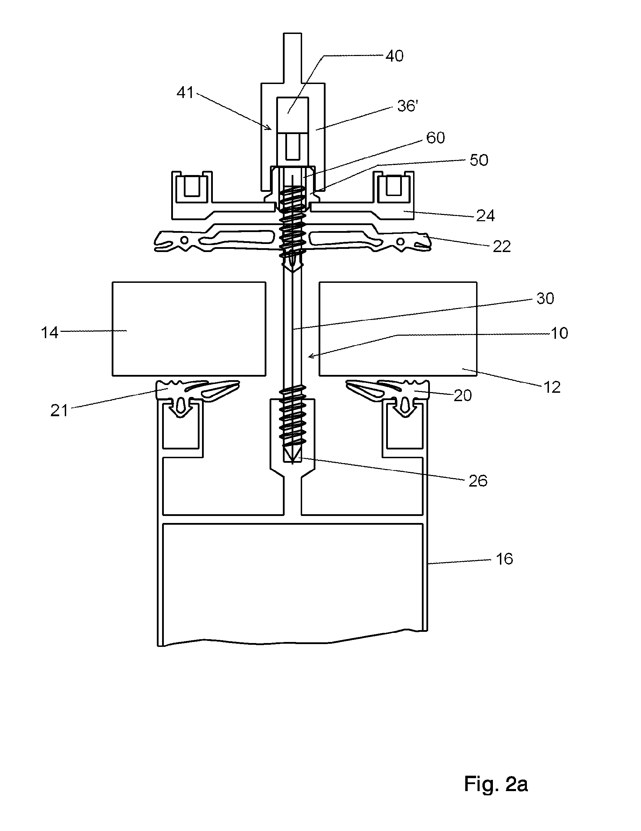

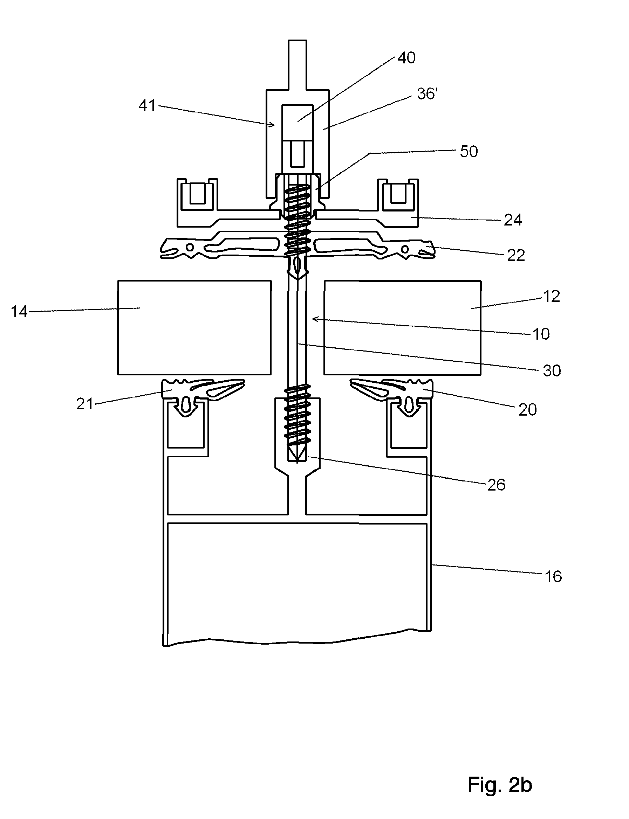

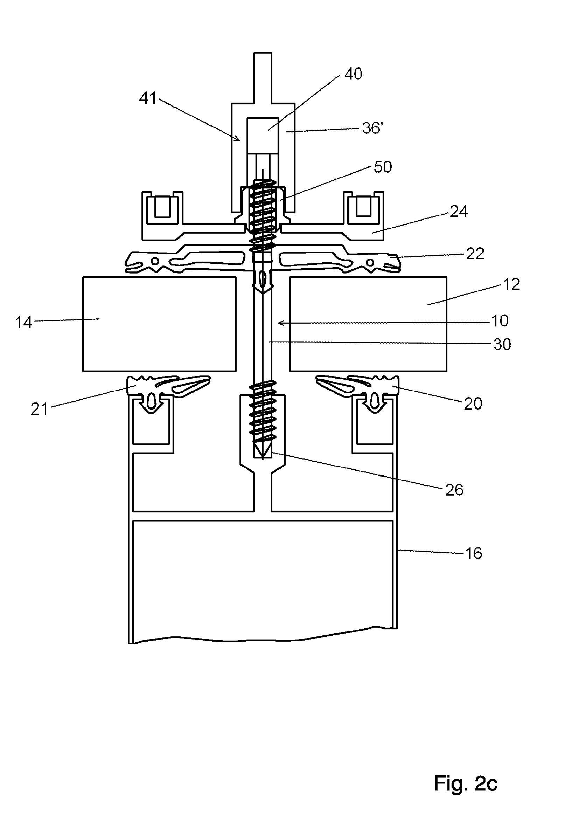

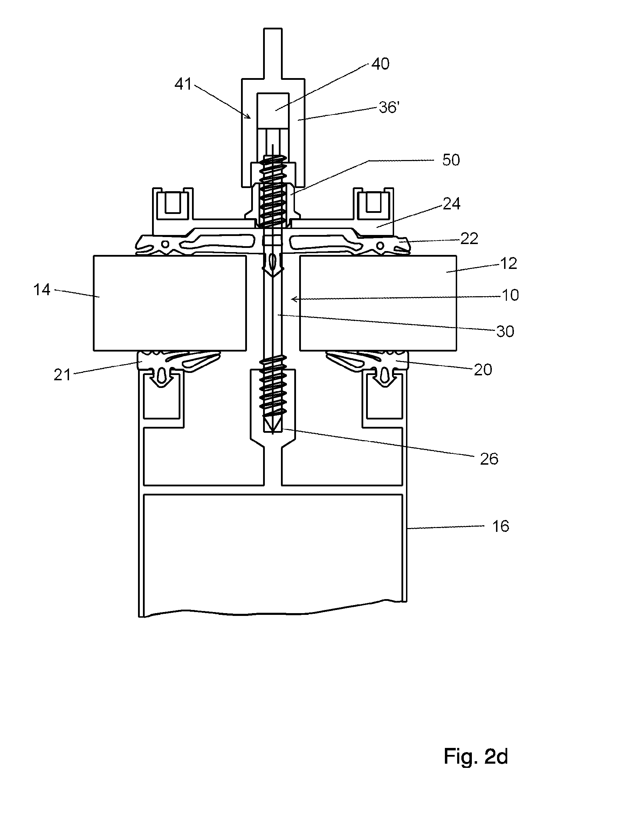

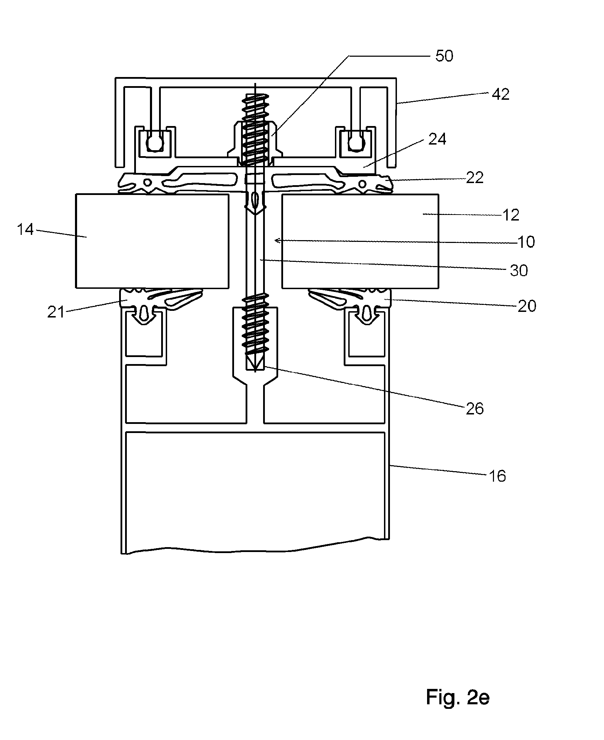

Fig. 2 veranschaulicht in den Fig. 2a - 2e fünf Phasen des Setzens des gleichen Befestigers 10 in einem Fall, in welchem auf dem Grundprofil 16 Glasscheiben 12, 14 zu befestigen sind, die eine geringere Dicke als in dem in Fig. 1 dargestellten Fall haben. Fig. 2a entspricht ansonsten etwa der Phase nach Fig. 1 b. Dabei hat der Gewindestift 30 bereits den Boden des Sackloches 26 erreicht. Gegenüber der Ausbildung des Systems nach Fig. 1 wird in dem in Fig. 2 dargestellten Fall ein Antriebsbit 36' von größerer Länge verwendet. Es ist zu erkennen, dass sich deshalb in Fig. 2a der Bolzen 40 noch nicht auf dem Gewindestift 30 abstützt und dass gegenüber der in Fig. 1b dargestellten Phase die Glasauflagedichtung 22 noch einen weiteren Weg nach unten zurückzulegen hat.

In der in Fig. 2b dargestellten Phase ist die Mutter 50 bereits ein Stück weit auf dem Gewindestift 30 nach unten geschraubt worden, so dass sich die Glasauflagedichtung 22 bereits näher an den Glasscheiben 12, 14 befindet als in Fig. 2a.

In der in Fig. 2c dargestellten Phase hat sich die Mutter 50 auf dem Gewindestift 30 bereits so weit nach unten bewegt, dass der Gewindestift oben aus der Mutter hervorsteht. Die Glasauflagedichtung 22 hat sich den Glasscheiben 12, 14 nun so weit wie in Fig. 1b genähert. Der Bolzen 40 stützt sich ebenfalls bereits auf dem Gewindestift 30 ab wie in Fig. 1 b.

Wenn die Mutter 50 auf dem Gewindestift 30 weiter nach unten gedreht wird, erreicht sie schließlich die in Fig. 2d dargestellte Phase, in welcher sie die Kraftangriffsöffnung 38 des Antriebsbits 36' bereits verlassen hat, so dass die Mutter 50 durch das Antriebsbit 36' nicht länger angetrieben wird. Das Antriebsbit 36' kann in der Phase nach Fig. 2d von dem Befestiger 10 entfernt werden.

Abschließend braucht lediglich noch ein Abdeckprofil 42 auf die Glashalteleiste 24 aufgesetzt zu werden, wie es in Fig. 2e gezeigt ist.

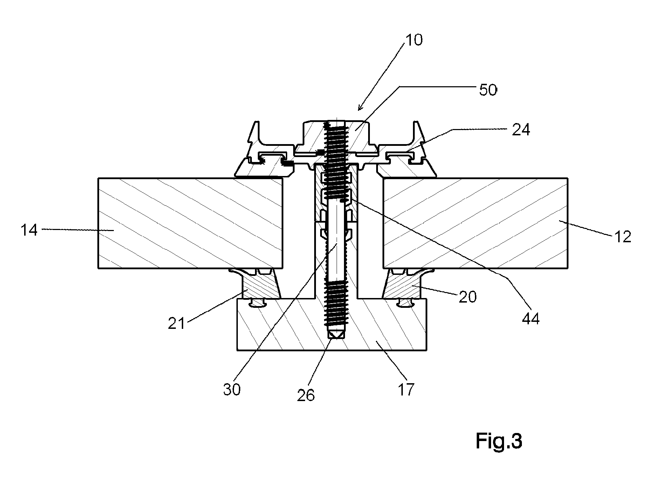

Fig. 3 zeigt den Einsatz eines Befestigers 10 und eines Systems nach der Erfindung in Verbindung mit einem Bauteil 17, bei welchem es sich nicht um ein Grundprofil eines Pfostens oder Riegels handelt. Zusätzlich wird zwischen dem Schraubsteg 18 und der Glashalteleiste 24 ein Wärmedämmelement 44 eingesetzt.

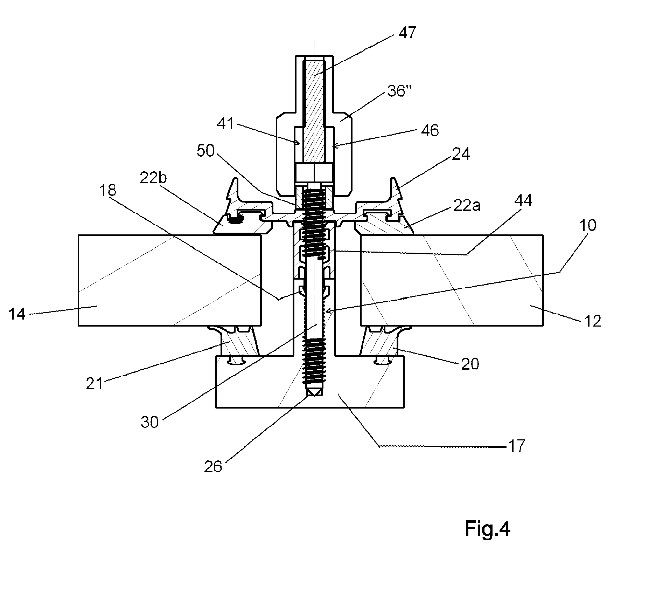

In dem Ausführungsbeispiel nach Fig. 4 wird statt eines Gummiprofils als Glasauflagedichtung 22 ein Paar Glasauflagedichtungen 22a, 22b verwendet, die als gesonderte Gummiprofile ausgebildet sind. Weiter ist in dem Ausführungsbeispiel nach Fig. 4 statt des Bolzens 40, der in ein Antriebsbit eingeschoben ist, ein Bolzen 46 vorhanden, der in einem Antriebsbit 36" axial einstellbar ist. Zu diesem Zweck hat der Bolzen 46 einen Gewindeansatz 47, der mit dem Antriebsbit 36" in Gewindeeingriff ist. Dadurch lässt sich mit dem durch den Bolzen 46 in dem Antriebsbit 36" gebildeten Tiefenanschlag 41 der Befestiger 10 auf entsprechende Glasdicken einstellen.

Bei dem in Fig. 5 gezeigten Ausführungsbeispiel ist die Hemmeinrichtung ein an dem die Mutter 50 aufnehmenden Ende des Gewindestiftes 30 angebrachter Fortsatz 31, dessen Verbindung mit dem Gewindestift 30 eine dem vorgebbaren Drehmoment angepasste Sollbruchstelle 33 aufweist. Die Sollbruchstelle wird in diesem Ausführungsbeispiel durch eine Einschnürung des Querschnittes des Fortsatzes 31 gebildet. Der Fortsatz 31 weist wie die Mutter 50 einen äußeren Kraftangriff 37 auf, der auch hier ein Sechskant ist. Die Kraftangriffsöffnung 38 eines Antriebsbits 36"' ist so ausgebildet, dass sie die äußeren Kraftangriffe 37, 57 des Fortsatzes 31 und der Mutter 50 gemeinsam erfasst, wie es in Fig. 5 zu erkennen ist. Wenn der Befestiger 10 wie in den zuvor beschriebenen Ausführungsbeispielen den Boden des Sackloches 26 erreicht, steigt das Drehmoment steil an und der Fortsatz 31 wird an der Sollbruchstelle 31 abgeschert. Von da an ist die Verbindung zwischen dem Fortsatz 31 und dem Gewindestift 30 unterbrochen, so dass nun die Mutter 50 bei fortgesetztem Drehen des Antriebsbits 36"' wie in den zuvor beschriebenen Ausführungsbeispielen auf dem Gewindestift 30 nach unten geschraubt wird, bis sie schließlich die Kraftangriffsöffnung 38 verlässt.

Statt des Sackloches 26 kann auch eine unten offene Bohrung verwendet werden, in die der Befestiger 10 einschraubbar ist, bis der Gewindestift 30 auf einem Anschlag (nicht dargestellt) an der Tragkonstruktion unterhalb des Loches aufsetzt. Außer bei dem vorgenannten Ausführungsbeispiel, in welchem die Hemmeinrichtung ein Fortsatz mit einer Sollbruchstelle ist, kann in sämtlichen Hemmeinrichtungen, die davor beschrieben worden sind, eine Klebeverbindung zusätzlich verwendet werden.

### Bezugszeichenliste

- 10: Befestiger
- 12: Glasscheibe
- 14: Glasscheibe
- 16: Grundprofil
- 17: Bauteil
- 18: Schraubsteg
- 20: Glasauflagedichtung
- 21: Glasauflagedichtung
- 22: Glasauflagedichtung
- 22a: Glasauflagedichtung
- 22b: Glasauflagedichtung
- 24: Glashalteleiste
- 26: Sackloch
- 30: Gewindestift
- 31: Fortsatz
- 32: Verankerungsgewinde
- 33: Sollbruchstelle
- 34: Spanngewinde
- 36: Antriebsbit
- 36': Antriebsbit
- 36": Antriebsbit
- 36"': Antriebsbit
- 37: Kraftangriff
- 38: Kraftangriffsöffnung
- 40: Bolzen
- 41: Tiefenanschlag
- 42: Abdeckprofil
- 44: Wärmedämmelement
- 46: Bolzen
- 47: Gewindeansatz
- 50: Mutter
- 57: Kraftangriff
- 60: Klemmbuchse

## Patentansprüche

1. System zum Befestigen eines Bauteils, insbesondere eines Flächenelements, auf einer Tragkonstruktion,
mit einem Befestiger (10),
mit einem mit einem Schraubwerkzeug kuppelbaren Antriebsbit (36, 36', 36", 36"') zum Erfassen und Drehen des Befestigers (10) und
mit einem dem Antriebsbit (36, 36', 36") zugeordneten Tiefenanschlag (41) zum Trennen der Antriebsverbindung zwischen dem Antriebsbit (36, 36', 36") und dem Befestiger (10) bei dem Erreichen einer vorgebbaren Relativposition des Befestigers (10),
**dadurch gekennzeichnet, dass** der Befestiger (10) aus einem Gewindestift (30) und einer mit dem Gewindestift (30) in Gewindeeingriff befindlichen Mutter (50) besteht, wobei zwischen der Mutter (50) und dem Gewindestift (30) eine Hemmeinrichtung angeordnet ist, die bis zum Erreichen eines vorgebbaren Drehmoments eine Relativdrehung von Mutter (50) und Gewindestift (30) verhindert und so das Setzen des Befestigers (10) durch Drehen an der Mutter (50) und ab dem Erreichen des vorgebbaren Drehmoments das Drehen der Mutter (50) auf dem Gewindestift (30) und so das Festspannen des Bauteils (12, 14) auf der Tragkonstruktion (16) erlaubt, wobei die vorgebbare Relativposition des Befestigers (10) die Relativposition der Mutter (50) auf dem Gewindestift (30) ist, dass die Mutter (30) einen äußeren Kraftangriff (57) aufweist,
dass das Antriebsbit (36, 36', 36") eine die Mutter (50) in einer Kraftangriffsöffnung (38) aufnehmende und die Mutter (50) an dem Kraftangriff (57) erfassende Nuss ist und
dass der Tiefenanschlag (41) auf dem Gewindestift (30) abstützbar ausgebildet ist.

2. System nach Anspruch 1, **gekennzeichnet durch** ein Loch in der Tragkonstruktion (16), in das der Gewindestift (30) zum Setzen einschraubbar ist.

3. System nach Anspruch 2, **dadurch gekennzeichnet, dass** das Loch ein Sackloch (26) ist, in das der Befestiger bis zum Aufsetzen des Gewindestiftes (30) am Boden des Loches einschraubbar ist.

4. System nach Anspruch 2, **dadurch gekennzeichnet, dass** Loch eine unten offene Bohrung ist, in die der Befestiger (10) einschraubbar ist, bis der Gewindestift (30) auf einem Anschlag an der Tragkonstruktion (16) unterhalb des Loches aufsetzt.

5. System nach einem der vorhergehenden Ansprüche, **dadurch gekennzeichnet, dass** der Tiefenanschlag (41) ein in der Kraftangriffsöffnung (38) des Antriebsbits (36, 36', 36") axial vorstehender Bolzen (40, 46) ist.

6. System nach Anspruch 5, **dadurch gekennzeichnet, dass** der Bolzen (40) in die Kraftangriffsöffnung (38) des Antriebsbits (36) einschiebbar ausgebildet ist.

7. System nach Anspruch 5 oder 6, **dadurch gekennzeichnet, dass** der Bolzen (40, 46) ein Stufenbolzen ist.

8. System nach einem der Ansprüche 5 bis 7, **dadurch gekennzeichnet, dass** der Bolzen (46) in dem Antriebsbit (36") axial einstellbar ist.

9. System nach Anspruch 8, **dadurch gekennzeichnet, dass** der Bolzen (46) einen Gewindeansatz (47) hat, der mit dem Antriebsbit (36") in Gewindeeingriff ist.

10. System nach Anspruch 5, **dadurch gekennzeichnet, dass**, wenn die Hemmeinrichtung einen an dem die Mutter (50) aufnehmenden Ende des Gewindestiftes (30) angebrachten Fortsatz (31) aufweist, dessen Verbindung mit dem übrigen Gewindestift (30) eine dem vorgebbaren Drehmoment angepasste Sollbruchstelle (33) hat, der Fortsatz (31) wie die Mutter (50) einen äußeren Kraftangriff (37) aufweist und die Kraftangriffsöffnung (38) des Antriebsbits (36") so ausgebildet ist, dass sie die äußeren Kraftangriffe (37, 57) des Fortsatzes (31) und der Mutter (50) gemeinsam erfasst.

11. System nach einem der Ansprüche 1 bis 9, **dadurch gekennzeichnet, dass** die Hemmeinrichtung durch eine zwischen den Gewinden des Gewindestiftes (30) und der Mutter (50) angeordnete Klemmbuchse (60) gebildet ist.

12. System nach Anspruch 11, **dadurch gekennzeichnet, dass** die Klemmbuchse (60) aus Kunststoff besteht.

13. System nach einem der Ansprüche 1 bis 9, **dadurch gekennzeichnet, dass** das Gewinde des Gewindestiftes (30) ein Verankerungsgewinde (32) an einem Ende und ein Spanngewinde (34) an dem die Mutter (50) aufnehmenden anderen Ende umfasst und
dass der Gewindeeingriff zwischen der Mutter (50) und dem Spanngewinde (34) des Gewindestiftes (30) so ausgebildet ist, dass er bis zum Erreichen des vorgebbaren Drehmoments selbsthemmend ist.

14. System nach einem der Ansprüche 1 bis 9, **dadurch gekennzeichnet, dass** die Hemmeinrichtung durch eine Klebeverbindung oder durch eine zusätzliche Klebeverbindung zwischen den Gewinden des Gewindestiftes (30) und der Mutter (50) gebildet ist
